# EUROPEAN PATENT APPLICATION

(11) **EP 4 742 132 A1**
(43) Date of publication of application: **13.05.2026**
(21) Application number: 25214073.6
(22) Date of filing: 06.11.2025
(51) Int. Cl.: G06Q 20/32, G06Q 20/40, G06Q 30/0207

(54) **NFC STUDENT BUSINESS PROCESSING METHOD, DEVICE, AND EQUIPMENT**

(30) Priority: 06.11.2024 CN 202411573360
(71) Applicant: Alipay (Hangzhou) Digital Service Technology Co., Ltd., Hangzhou, Zhejiang 310000 (CN)
(72) Inventor: YAO, Sida, Hangzhou, Zhejiang, 310000 (CN); FU, Yiling, Hangzhou, Zhejiang, 310000 (CN)
(74) Representative: Fish & Richardson P.C.

(57) **Abstract**

An NFC student service processing solution that is used in a merchant NFC terminal includes: receiving a student service trigger instruction sent by a merchant payment collection device, and entering a student identity verification state in response to the student service trigger instruction; in the student identity verification state, if a user mobile terminal approaches an NFC sensing area on the merchant NFC terminal, performing NFC communication with the user mobile terminal to enable the merchant NFC terminal or the merchant payment collection device to obtain a result of student identity verification of a target user corresponding to the user mobile terminal; and prompting payment status information based on a status of performing, by the merchant NFC terminal or the merchant payment collection device, a corresponding student benefit payment service for the target user in response to the result.

## Description

### TECHNICAL FIELD

This specification relates to the field of near field communication (NFC) technologies, and in particular, to NFC student service processing methods, apparatuses, and devices.

### BACKGROUND

With development of Internet technologies and wide use of smartphones, an increasing quantity of services can be performed by using corresponding applications on the smartphone. This brings great convenience to people's lives.

To attract traffic and enhance brand influence, many merchants launch various online promotional activities. These promotional activities usually allow users to scan quick response (QR) codes for coupons or directly obtain coupons in merchant applications. All registered users can obtain and use coupons conveniently.

In practice, some merchants are starting to pay attention to the student demographic, and aim to launch exclusive benefits specifically for the students. Reasons are as follows: In one aspect, the students have limited spending power. Therefore, such exclusive benefits can more effectively win favor of the students, making the students more likely to become loyal customers of the merchant. In another aspect, the students are inherently social, and word-of-mouth about merchants spreads more easily among the students. In addition, the students often gather in small to large groups in the real world, leading to a high concentration of traffic. Therefore, the exclusive benefits help more efficiently obtain the student traffic.

Certainly, to obtain the exclusive benefits, the students need to undergo corresponding student identity verification. Currently, common ways include: presenting a physical student ID card to a staff, or providing detailed proof of information such as a name, an ID card number, a school name, and a student ID number in the merchant application. In the former way, there may be fraud, the students may not always carry their physical student ID cards, and verification by the staff is inefficient. In the latter way, the students need to manually fill in a substantial amount of information on the spot, and need to repeat the process for different merchants, making the operation cumbersome and inefficient.

In view of this, there is a need for a solution that enables the student benefit services to be performed for the students more conveniently, efficiently, and securely.

### SUMMARY

One or more implementations of this specification provide NFC student service processing methods, apparatuses, and devices, to resolve the following technical problem: There is a need for a solution that enables the student benefit services to be performed for the students more conveniently, efficiently, and securely.

To resolve the above-mentioned technical problem, one or more implementations of this specification are implemented as follows.

One or more implementations of this specification provide an NFC student service processing method performed by a merchant NFC terminal. The method includes: receiving a student service trigger instruction sent by a merchant payment collection device, and entering a student identity verification state in response to the student service trigger instruction; in the student identity verification state, if a user mobile terminal approaches an NFC sensing area on the merchant NFC terminal, performing NFC communication with the user mobile terminal to enable the merchant NFC terminal or the merchant payment collection device to obtain a result of student identity verification of a target user corresponding to the user mobile terminal, where the student identity verification is completed quickly based on user information on a platform that is provided by a service provider of the merchant NFC terminal and that is interconnected with a plurality of different merchants; and prompting payment status information based on a status of performing, by the merchant NFC terminal or the merchant payment collection device, a corresponding student benefit payment service for the target user in response to the result.

One or more implementations of this specification provide another NFC student service processing method performed by a user mobile terminal. The method includes: after a merchant NFC terminal enters a student identity verification state in response to a student service trigger instruction sent by a merchant payment collection device, approaching an NFC sensing area on the merchant NFC terminal to perform NFC communication with the merchant NFC terminal; automatically entering a corresponding service page under triggering of the NFC communication, and invoking, in the service page, a student identity verification service provided by a platform to quickly complete student identity verification based on user information on the platform, where the platform is provided by a service provider of the merchant NFC terminal, and is interconnected with a plurality of different merchants; and obtaining a result of the student identity verification, so that the merchant NFC terminal or the merchant payment collection device prompts payment status information for a status in which a target user performs a corresponding student benefit payment service in response to the result.

One or more implementations of this specification provide an NFC student service processing apparatus used in a merchant NFC terminal. The apparatus includes: a verification state entering module, configured to: receive a student service trigger instruction sent by a merchant payment collection device, and enter a student identity verification state in response to the student service trigger instruction; an NFC communication verification module, configured to: in the student identity verification state, if a user mobile terminal approaches an NFC sensing area on the merchant NFC terminal, perform NFC communication with the user mobile terminal to enable the merchant NFC terminal or the merchant payment collection device to obtain a result of student identity verification of a target user corresponding to the user mobile terminal, where the student identity verification is completed quickly based on user information on a platform that is provided by a service provider of the merchant NFC terminal and that is interconnected with a plurality of different merchants; and a payment status prompt module, configured to prompt payment status information based on a status of performing, by the merchant NFC terminal or the merchant payment collection device, a corresponding student benefit payment service for the target user in response to the result.

One or more implementations of this specification provide an NFC student service processing apparatus used in a user mobile terminal. The apparatus includes: an NFC approaching communication module, configured to: after a merchant NFC terminal enters a student identity verification state in response to a student service trigger instruction sent by a merchant payment collection device, approach an NFC sensing area on the merchant NFC terminal to perform NFC communication with the merchant NFC terminal; a student quick verification module, configured to: automatically enter a corresponding service page under triggering of the NFC communication, and invoke, in the service page, a student identity verification service provided by a platform to quickly complete student identity verification based on user information on the platform, where the platform is provided by a service provider of the merchant NFC terminal, and is interconnected with a plurality of different merchants; and a payment continuation processing module, configured to obtain a result of the student identity verification, so that the merchant NFC terminal or the merchant payment collection device prompts payment status information for a status in which a target user performs a corresponding student benefit payment service in response to the result.

One or more implementations of this specification provide an NFC student service processing device used in a merchant NFC terminal. The device includes: at least one processor; and a memory communicatively connected to the at least one processor, where the memory stores instructions that are capable of being executed by the at least one processor, and the instructions are executed by the at least one processor, so that the at least one processor is capable of: receiving a student service trigger instruction sent by a merchant payment collection device, and entering a student identity verification state in response to the student service trigger instruction; in the student identity verification state, if a user mobile terminal approaches an NFC sensing area on the merchant NFC terminal, performing NFC communication with the user mobile terminal to enable the merchant NFC terminal or the merchant payment collection device to obtain a result of student identity verification of a target user corresponding to the user mobile terminal, where the student identity verification is completed quickly based on user information on a platform that is provided by a service provider of the merchant NFC terminal and that is interconnected with a plurality of different merchants; and prompting payment status information based on a status of performing, by the merchant NFC terminal or the merchant payment collection device, a corresponding student benefit payment service for the target user in response to the result.

One or more implementations of this specification provide an NFC student service processing device used in a user mobile terminal. The device includes: at least one processor; and a memory communicatively connected to the at least one processor, where the memory stores instructions that are capable of being executed by the at least one processor, and the instructions are executed by the at least one processor, so that the at least one processor is capable of: after a merchant NFC terminal enters a student identity verification state in response to a student service trigger instruction sent by a merchant payment collection device, approaching an NFC sensing area on the merchant NFC terminal to perform NFC communication with the merchant NFC terminal; automatically entering a corresponding service page under triggering of the NFC communication, and invoking, in the service page, a student identity verification service provided by a platform to quickly complete student identity verification based on user information on the platform, where the platform is provided by a service provider of the merchant NFC terminal, and is interconnected with a plurality of different merchants; and obtaining a result of the student identity verification, so that the merchant NFC terminal or the merchant payment collection device prompts payment status information for a status in which a target user performs a corresponding student benefit payment service in response to the result.

The above-mentioned at least one technical solution in one or more implementations of this specification can achieve the following beneficial effects: A student identity verification quick channel is provided for a user based on a merchant NFC terminal and a platform capability of a service provider of the merchant NFC terminal. In this case, a merchant can connect a merchant payment collection device to the merchant NFC terminal, to conveniently access an NFC interaction capability and a student identity verification support capability without basically reconstructing the merchant payment collection device. When the merchant needs to serve a student, the merchant can trigger, by using the merchant payment collection device, the merchant NFC terminal to enter a student identity verification state. In this case, the student only needs to "tap" (provided that a distance is sufficiently close) the merchant payment collection device by using a user mobile terminal (a smartphone, a smartwatch, etc.) with an NFC function, so as to trigger to conveniently invoke a platform capability on the user mobile terminal, for example, quickly complete student identity verification based on personal information or a historical use status on a platform, to obtain a corresponding student benefit, and smoothly continue to use the student benefit by using the merchant payment collection device or the merchant NFC terminal to perform a student benefit service. In this process, operations are convenient and efficient, and security is ensured with the platform. Related verification information does not need to be filled in again even if services are performed on different merchants interconnected with the platform, and the merchants do not need to develop corresponding verification functions. This is very friendly to both student users and the merchants.

### BRIEF DESCRIPTION OF DRAWINGS

To describe the technical solutions in the implementations of this specification or in the conventional technology more clearly, the following briefly describes the accompanying drawings needed for describing the implementations or the conventional technology. Clearly, the accompanying drawings in the following descriptions merely show some implementations of this specification, and a person of ordinary skill in the art can still derive other drawings from these accompanying drawings without creative efforts.
FIG. 1 is a schematic flowchart illustrating an NFC student service processing method, according to one or more implementations of this specification.
FIG. 2 is a schematic flowchart illustrating a two-step NFC interaction processing solution, according to one or more implementations of this specification.
FIG. 3 is a schematic diagram illustrating a principle of an implementation solution of the solution in FIG. 1 in an application scenario, according to one or more implementations of this specification.
FIG. 4 is a schematic flowchart illustrating an auxiliary determining solution for the solution in FIG. 2, according to one or more implementations of this specification.
FIG. 5 is a schematic diagram illustrating a principle of another implementation solution of the solution in FIG. 1 in an application scenario, according to one or more implementations of this specification.
FIG. 6 is a schematic flowchart illustrating another NFC student service processing method, according to one or more implementations of this specification.
FIG. 7 is a schematic diagram illustrating a structure of an NFC student service processing apparatus, according to one or more implementations of this specification.
FIG. 8 is a schematic diagram illustrating a structure of another NFC student service processing apparatus, according to one or more implementations of this specification.
FIG. 9 is a schematic diagram illustrating a structure of another NFC student service processing device, according to one or more implementations of this specification.
FIG. 10 is a schematic diagram illustrating a structure of another NFC student service processing device, according to one or more implementations of this specification.

### DETAILED DESCRIPTION

Implementations of this specification provide NFC student service processing methods, apparatuses, and devices, and storage media.

To enable a person skilled in the art to better understand the technical solutions in this specification, the following clearly and comprehensively describes the technical solutions in implementations of this specification with reference to the accompanying drawings in implementations of this specification. Clearly, the described implementations are merely some rather than all of the implementations of this specification. All other implementations obtained by a person of ordinary skill in the art based on the implementations of this specification without creative efforts shall fall within the protection scope of this application.

This application proposes a solution that involves extending an existing merchant payment collection device of a merchant to connect with an NFC terminal (which is referred to as a merchant NFC terminal) provided by a payment service provider (or, certainly, another service provider)Furthermore, the rapid student identity verification capability built on the payment service provider's platform is also integrated into the merchant NFC terminal. This allows different merchants and students to interact primarily based on NFC to achieve a more unified and quick student identity verification, thereby enabling smooth and efficient use of corresponding student benefits for transactions. This solution can also effectively reduce renovation and deployment costs (mainly referred to as extra development costs) of the merchant, and help enhance competitiveness of the platform and create a win-win situation for all parties.

The following continues to describe the solutions of this application based on such an overall idea.

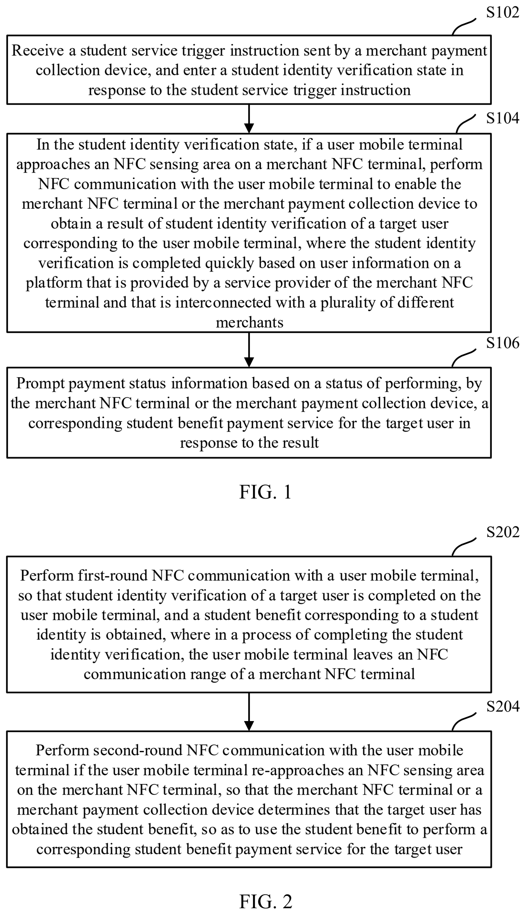

For ease of description, descriptions are first provided mainly with reference to FIG. 1 from a perspective of a merchant NFC terminal. FIG. 1 is a schematic flowchart illustrating an NFC student service processing method, according to one or more implementations of this specification. The procedure can be executed by a merchant NFC terminal, and can specifically relate, in terms of software, to an operating system of the merchant NFC terminal and a service application mounted on the merchant NFC terminal, for example, a payment application provided by a payment service provider or another type of application, or a mini program accessed in these applications.

The procedure in FIG. 1 includes the following steps.

S102: Receive a student service trigger instruction sent by a merchant payment collection device. and enter a student identity verification state in response to the student service trigger instruction.

A merchant has usually deployed a merchant payment collection device (for example, a desktop cash register or a handheld POS machine) at a checkout and cash register software used on the merchant payment collection device. These are common infrastructures at the checkout, and can support one or more basic payment ways, for example, bank card payment, membership card payment, or quick response (QR) code payment, but may not support NFC payment. A staff needs to rely on these infrastructures to perform payment collection on a user. Certainly, these infrastructures can alternatively be of a user-self-service type, so that the staff does not need to perform an operation, and the user can independently perform an operation to complete a check. These infrastructures can be provided by different service providers, and cash registers and cash register software used by different merchants may also be different.

To further access an NFC capability for the merchant, the payment service provider can provide the merchant NFC terminal. The merchant NFC terminal is connected to the merchant payment collection device in a wireless or wired way, and provides the NFC capability to assist the merchant payment collection device to work, so that the merchant payment collection device can also indirectly support an NFC payment way.

In most cases, a service provider of the merchant payment collection device and the merchant cash register may not be the payment service provider. These NFC capability access services provided by the payment service provider can be compatible with a plurality of different merchant payment collection devices and merchant cash registers, so as to facilitate more merchants.

In addition, it is worthwhile to note that the merchant payment collection device and the merchant NFC terminal can also be integrated into an entire device, which may be particularly implemented in a case that they are provided by a same service provider. In this case, information exchange between the merchant payment collection device and the merchant NFC terminal described in this application can be specifically internal information exchange of the entire device.

In one or more implementations of this specification, a student benefit is provided for a student at a current merchant, and the student can use the student benefit (for example, a student price, a student gift, or a student bundle) to obtain a favorable or additional incentive upon payment. Certainly, to use the student benefit, the student needs to undergo student identity verification to prove a student identity.

For ease of description, assume that a manual payment collection way is used, and if a self-service payment collection way is used, the user can independently perform an operation instead of the staff, and implementation of this solution is also not impeded.

Assume that the user currently arrives at the checkout to use the student benefit, the user can notify the staff, so that the staff performs a corresponding operation on the merchant payment collection device (for example, tap a button specially created for a student service, or tap a universal payment initiation button), so that the merchant payment collection device sends the student service trigger instruction to the merchant NFC terminal. In this case, the merchant NFC terminal enters the student identity verification state, and can prompt, by using a light, a sound, or display information, the user that preparation is ready and student identity verification can be performed, so that the user can accurately understand.

S104: In the student identity verification state, if a user mobile terminal approaches an NFC sensing area on the merchant NFC terminal, perform NFC communication with the user mobile terminal to enable the merchant NFC terminal or the merchant payment collection device to obtain a result of student identity verification of a target user (namely, a user that currently use the user mobile terminal, or a user that currently logs in to the user mobile terminal, which is briefly referred to as a current user or a user below for ease of description) corresponding to the user mobile terminal, where the student identity verification is completed quickly based on user information on a platform that is provided by a service provider of the merchant NFC terminal and that is interconnected with a plurality of different merchants.

For ease of user operation, the merchant NFC terminal can be placed at a position where the user is easy to access, for example, a desktop of the checkout or a position that is on a self-service machine and that is directed to the user. For ease of deployment, the merchant NFC terminal is a small terminal that is easy to move. The merchant NFC terminal has the NFC sensing area for NFC interaction, and optionally can further have a display screen area, etc.. The user mobile terminal is a device like a smartphone or a smartwatch that supports an NFC function.

The user places the user mobile terminal near the NFC sensing area on the merchant NFC terminal until it is sufficiently close (generally within a few centimeters, where a tap operation, referred to as "tap", can be performed on the NFC sensing area for insurance purposes) to successfully sense for performing NFC communication.

In one or more implementations of this specification, the merchant NFC terminal triggers, through NFC communication, the user mobile terminal to enter a specific service page, so as to perform the student identity verification. For example, the merchant NFC terminal can provide an address of the service page to the user mobile terminal through the NFC communication, so that the user mobile terminal automatically accesses the address. Alternatively, the user mobile terminal can complete the student identity verification for the user in advance, save the result of the student identity verification locally or on a cloud in a trusted credential way, and provide the stored result to the merchant NFC terminal through the NFC communication.

With assistance of the cloud, the result of the student identity verification may not pass through the merchant NFC terminal, or may even be provided to the merchant payment collection device without passing through the merchant NFC terminal. For example, the merchant NFC terminal can notify the user mobile terminal of the address. Then, the user mobile terminal notifies the cloud to directly deliver the result of the student identity verification of the user to the merchant payment collection device. Certainly, the result of the student identity verification can alternatively be provided only to the merchant NFC terminal and converged to the merchant NFC terminal for use, so that the merchant payment collection device performs execution as much as possible based on original service logic. However, a service logic difference introduced in this solution is implemented as much as possible on the merchant NFC terminal. This helps further reduce needs for renovating the merchant payment collection device in implementation of this solution.

In one or more implementations of this specification, the service provider of the merchant NFC terminal has one or more platforms that serve a large quantity of different merchants and different users, and has accumulated a large amount of privacy-protected and trusted user information, such as user registration information, user historical service information, and user historical verification information, through the platforms. Based on the information (for example, the user historical verification information may include student identity verification information), it may be quickly determined whether the user is a student, or even if it cannot be determined accurately, it can be accurately determined only provided that the user further provides less supplementary information (which also effectively reduces an operation burden on the user to fill in on-site to complete verification). Based on this, the platform is capable of providing a rapid student identity verification service.

In this case, the merchant NFC terminal can perform NFC interaction through the user mobile terminal, to trigger the user mobile terminal to automatically invoke the service provided by the platform, so as to quickly perform the student identity verification of the current user. Merchant NFC terminals of different merchants can share the service, so that the user can implement such quick verification (for example, one-click verification of the student identity of the user succeeds, or even automatic redirect verification succeeds without any user operation) at a large quantity of merchants, without having to repeatedly fill in information.

The user can alternatively complete student identity verification in advance on the platform. Then, the platform generates a trusted credential based on a result that the verification succeeds, and delivers the trusted credential to the user, and the trusted credential is securely stored on the user mobile terminal locally. In this case, the user mobile terminal can directly perform NFC communication with the merchant NFC terminal to provide the trusted credential to the merchant NFC terminal for confirmation (directly send the trusted credential to the merchant NFC terminal, or can complete confirmation by using a trusted computation, where the trusted credential is always placed in a local secure computing environment of the user mobile terminal), so that the merchant NFC terminal can quickly obtain the result of the student identity verification of the user.

In one or more implementations of this specification, if the user performs student identity verification and the verification succeeds, a corresponding student benefit can be further obtained by using the user mobile terminal. The student benefit can be automatically received, or can be manually obtained by the user. Certainly, the student benefit can alternatively be distributed to the user on the merchant payment collection device or the merchant NFC machine.

The result of the student identity verification is indirectly represented by the student benefit obtained based on the student identity, and/or is directly represented by whether the verification succeeds. In the former case, for example, if the verification succeeds and the user mobile terminal obtains the student benefit and then provides credential information of the student benefit (which can alternatively be obtained through querying the cloud instead of being directly provided by the user mobile terminal) to the merchant NFC terminal or the merchant payment collection device, the merchant NFC terminal or the merchant payment collection device can indirectly determine that the student identity verification of the user succeeds. Otherwise, if the student identity verification of the user fails, the user cannot obtain the student benefit.

S106: Prompt payment status information based on a status of performing, by the merchant NFC terminal or the merchant payment collection device, a corresponding student benefit payment service for the target user in response to the result.

In one or more implementations of this specification, assume that the result reflects that the student identity verification of the current user has succeeded and the current user is actually a student, a corresponding student benefit can be used to perform a payment service for the user, so that the user additionally obtains a corresponding benefit, for example, a preferential price or an additional gift. If the student benefit payment service is performed by the merchant payment collection device, the merchant payment collection device can notify the merchant NFC terminal of the payment status information, so that the merchant NFC terminal cooperates to prompt the user.

Certainly, if the result reflects that the student identity verification of the current user fails, a payment service can be performed based on a situation of a general user other than a student, instead of using a corresponding student benefit.

In the method in FIG. 1, a student identity verification quick channel is provided for a user based on a merchant NFC terminal and a platform capability of a service provider of the merchant NFC terminal. In this case, a merchant can connect a merchant payment collection device to the merchant NFC terminal, to conveniently access an NFC interaction capability and a student identity verification support capability without basically reconstructing the merchant payment collection device. When the merchant needs to serve a student, the merchant can trigger, by using the merchant payment collection device, the merchant NFC terminal to enter a student identity verification state. In this case, the student only needs to "tap" (provided that a distance is sufficiently close) the merchant payment collection device by using a user mobile terminal (a smartphone, a smartwatch, etc.) with an NFC function, so as to trigger to conveniently invoke a platform capability on the user mobile terminal, for example, quickly complete student identity verification based on personal information or a historical use status on a platform, to obtain a corresponding student benefit, and smoothly continue to use the student benefit by using the merchant payment collection device or the merchant NFC terminal to perform a student benefit service. In this process, operations are convenient and efficient, and security is ensured with the platform. Related verification information does not need to be filled in again even if services are performed on different merchants interconnected with the platform, and the merchants do not need to develop corresponding verification functions. This is very friendly to both student users and the merchants.

Based on the method shown in FIG. 1, this specification further provides some specific implementation solutions and extension solutions of the method, which are further described below.

In one or more implementations of this specification, in the student identity verification state, if the user mobile terminal approaches the NFC sensing area on the merchant NFC machine, the merchant NFC machine performs the NFC communication with the user mobile terminal to trigger the user mobile terminal to enter the corresponding service page, so that the user mobile terminal invokes, in the service page, the student identity verification service provided by the platform to quickly complete the student identity verification, and the merchant NFC machine or the merchant payment collection device correspondingly obtains the result of the student identity verification of the target user after the student identity verification is completed. Further, if the student identity verification succeeds, the current user can further obtain the corresponding student benefit in the service page or a linked page of the service page.

In view of that, in the entered service page, the user may need to perform an action like tap-to-verify or tap-to-obtain a student benefit, or even if the user does not need to perform these actions, the user may still want to view, in real time, information displayed on the user mobile terminal, and the user habitually retrieves the user mobile terminal from the NFC sensing area quickly, which may lead to uncertainty factors for subsequent information exchange and service execution. To avoid this case, in this application, a two-step "tap twice" solution with stronger fault tolerance and better rhythm is further designed, and an entire process is clearly divided into two sections. The first section is to verify a student identity to obtain a student benefit, and the second section is to perform a service by using the student benefit. The two sections each are triggered by "tap" of the user, which is also a confirmation with clear understanding from a perspective of the user. In addition, the user can tolerate a shorter duration window for each "tap", which enhances reliability. Based on this idea, one or more implementations of this specification provide a schematic flowchart of a two-step NFC interaction processing solution. Refer to FIG. 2.

The procedure in FIG. 2 includes the following steps.

S202: Perform first-round NFC communication with the user mobile terminal, so that the student identity verification of the target user is completed on the user mobile terminal, and the student benefit corresponding to the student identity is obtained, where in a process of completing the student identity verification, the user mobile terminal leaves an NFC communication range of the merchant NFC terminal.

In one or more implementations of this specification, the user first performs "tap" to trigger the first-round NFC communication. For example, the first-round NFC communication can include: providing, to the user mobile terminal through the NFC communication, address information of the service page for invoking the student identity verification service provided by the platform, so that the user mobile terminal automatically accesses the service page.

Certainly, the user mobile terminal can be requested, through only the first-round NFC communication, to return a credential indicating that the student identity verification succeeds, without specifically triggering page access. In conclusion, through this round of NFC communication, a merchant side can determine whether a current user is a student.

S204: Perform second-round NFC communication with the user mobile terminal if the user mobile terminal re-approaches the NFC sensing area on the merchant NFC terminal, so that the merchant NFC terminal or the merchant payment collection device determines that the target user has obtained the student benefit, so as to use the student benefit to perform the corresponding student benefit payment service for the target user.

In one or more implementations of this specification, the user retrieves the user mobile terminal after performing "tap", and can trigger the second-round NFC communication after performing "tap again". For example, the second-round NFC communication can include: obtaining a credential of the student benefit or identification information of the target user that is provided by the user mobile terminal through the NFC communication, where the identification information is used to query the student benefit obtained by the target user.

Here, for example, the identification information of the target user is obtained based on the NFC communication, so as to implement student benefit query and use. The user mobile terminal can also provide usage authorization information of the student benefit to the merchant NFC terminal through the second-round NFC communication.

It is worthwhile to note that, both the first-round NFC communication and the second-round NFC communication can include one or more rounds of information transmission and exchange, or can even include only one round of unidirectional information transmission. This can be specifically designed based on actual needs.

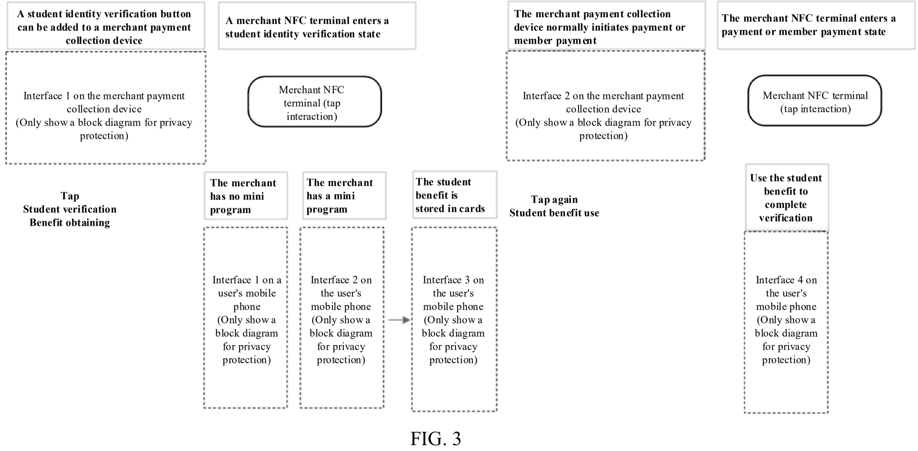

With reference to the solution in FIG. 2, more intuitively, one or more implementations of this specification further provide a schematic diagram of a principle of an implementation solution of the solution in FIG. 1 in an application scenario. Refer to FIG. 3. The implementation solution uses the idea of "tap twice" in FIG. 2. It is worthwhile to note that, some small page screenshots of corresponding devices in FIG. 3 are merely examples, and are not clearly shown for privacy protection. Specific content of these small screenshots does not need to be paid attention to, and only text descriptions are enough for correct understanding.

In the application scenario in FIG. 3, the merchant payment collection device is, for example, a cash register POS machine (not shown in the figure, where the first small screenshot is a cash register page on the cash register POS machine), the merchant NFC terminal is, for example, an NFC portable terminal with a screen (shown in a rounded rectangle), where the two devices can be connected in a way like Bluetooth, and the user mobile terminal is, for example, a smartphone.

The cash register POS machine can be renovated in advance to a certain extend. The renovation can be implemented by updating cash register software on the cash register POS machine, or can be implemented by installing additional auxiliary software (for example, a verification widget, or a small instruction widget used to assist in information transmission) on the cash register POS machine. In the latter way, cooperation of the cash register software is not needed, and implementation is easier. For example, a first operation control (for example, a student identity verification button) can be added to a service interface on the cash register POS machine. In this case, the staff can perform a corresponding operation (for example, tap the student identity verification button) on the first operation control on the cash register POS machine, and send the student service trigger instruction to the NFC portable terminal, so that the NFC portable terminal enters the student identity verification state.

Then, the user can "tap" the NFC portable terminal by using a smartphone of the user, so as to perform the first-round NFC communication, and then retrieve the smartphone to perform an operation on a mobile phone screen, so as to perform student verification and obtain the student benefit. In this case, the smartphone of the user redirects to a specific service page. For example, assume that a merchant has a mini program, a specified page of the mini program can be redirected, and if the merchant has no mini program, a specified page that is uniformly provided by the platform for a plurality of merchants can be redirected.

After redirecting, in the service page, a rapid student identity verification service provided by the platform is invoked by, for example, tapping a verification button in the page, so as to quickly complete verification. Assume that the verification succeeds, a student benefit obtaining page can be entered, the user can tap to obtain the student benefit, and the obtained student benefit can be placed in, for example, virtual cards of the user.

Then, after the smartphone of the user leaves the NFC communication range of the NFC portable terminal after the first-round NFC communication, the staff can perform a corresponding operation (for example, tap a payment button) on a second operation control on the cash register POS machine, to send a payment trigger instruction to the NFC portable terminal, so that the NFC portable terminal enters a payment state. Here, assume that the first operation control and the second operation control are not a same operation control (if the first operation control and the second operation control are a same operation control, corresponding determining and decision-making logic needs to be added to the control), the second operation control is an original control, and the first operation control is a control added through upgrading.

Then, the user can "tap again" the NFC portable terminal by using the smartphone of the user, and perform a payment procedure by performing the second-round NFC communication, so as to pay by using the student benefit currently obtained by the user, and complete verification of the student benefit.

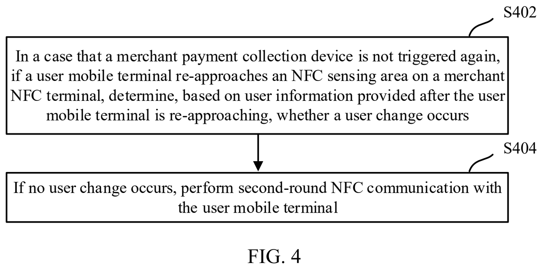

In the above-mentioned "tap twice" solution, to prevent another user other than the current user from accidentally triggering the merchant NFC terminal, one or more implementations of this specification further provide a schematic flowchart of an auxiliary determining solution for the solutions in FIG. 2 and FIG. 3. Refer to FIG. 4.

The procedure in FIG. 4 includes the following steps.

S402: In a case that the merchant payment collection device is not triggered again, if the user mobile terminal re-approaches the NFC sensing area on the merchant NFC terminal, determine, based on user information provided after the user mobile terminal is re-approaching, whether a user change occurs.

Here, assume that the merchant payment collection device only needs to be triggered once (certainly, this solution can also be used in a case of triggering twice), and the user can perform "tap" and "tap again" in sequence. In this case, although a device operation is simplified, an accidental operation may occur. For example, after "tap", the user mobile terminal that is re-approaching may not be a user mobile terminal that is approaching last time, but may be a user mobile terminal of another user. In other words, a user that performs "tap" and a user that performs "tap again" may not be a same user, and correspondingly may not use a same user mobile terminal.

To avoid a problem in a subsequent service caused by this case (a deviation between a working state of the merchant NFC terminal and an expectation of a currently-interacted user), it can be determined whether a user change occurs between former and latter times. If yes, it indicates that the latter user is not the former user, and the latter user may accidentally tap the merchant NFC terminal. Therefore, the second-round NFC communication may not be performed first. For example, that an error occurs in the latter user can be prompted, and the former user is prompted to continue to perform "tap again".

S404: If no user change occurs, perform the second-round NFC communication with the user mobile terminal.

If no user change occurs, it indicates that the latter user is the former user, and the second-round NFC communication can continue to be performed.

The above-mentioned descriptions are mainly based on the idea of "tap twice". The above-mentioned solution can also be simplified to implement the objective by "tap only once".

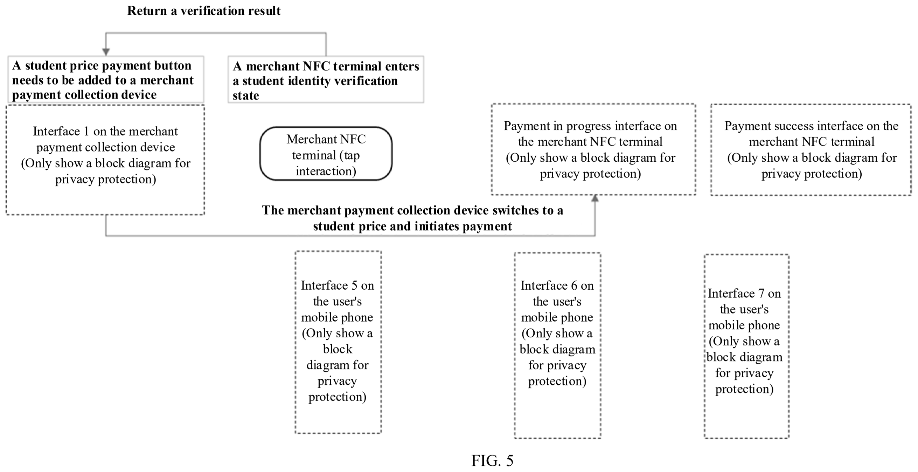

Based on the idea of "tap only once", one or more implementations of this specification further provide a schematic diagram of a principle of another implementation solution of the solution in FIG. 1 in an application scenario. Refer to FIG. 5.

In the solution in FIG. 5, after a merchant NFC terminal enters a student identity verification state, a user performs "tap", so that the merchant NFC terminal can perform NFC communication with a user mobile terminal to obtain a result of student identity verification of a target user corresponding to the user mobile terminal, and return the result to a merchant payment collection device.

Then, the merchant payment collection device can initiate a corresponding student benefit payment service based on a benefit preferential price corresponding to a student identity, for example, modify an original to-be-paid price to a student preferential price, and initiate payment to the user mobile terminal by using the merchant NFC terminal, so that the user can complete payment based on NFC. Three screenshots on a lower side of FIG. 5 are respectively a screenshot indicating that student identity verification is completed, a screenshot indicating payment in progress, and a screenshot indicating that payment is completed on the user mobile terminal.

In one or more implementations of this specification, as mentioned above, students are inherently social, and therefore often visit real-world stores in small to large groups. It is considered that sequential interaction verification before a checkout is inefficient, and such problem may be aggravated especially in a case of a long queue.

Based on this, a solution of supporting group student identity verification is further provided. In a scenario of this solution, the target user can include a login user of the user mobile terminal and one or more related users of the login user. For example, the login user is a student (referred to as a representative student for ease of description) in a plurality of students who come to the store together, and the related user is another student in the plurality of students. In this case, the above-mentioned user mobile terminal is, for example, a smartphone or a smartwatch of the representative student.

The merchant NFC terminal can enter a group student identity verification state in response to a student service trigger instruction (a button can be separately set for a group student case, or service logic corresponding to an existing button can be modified). In the group student identity verification state, if the user mobile terminal approaches an NFC sensing area on the merchant NFC terminal, NFC communication is performed with the user mobile terminal to enable the merchant NFC terminal or the merchant payment collection device to obtain a result of group student identity verification of the target user corresponding to the user mobile terminal. In this case, the result of the group student identity verification is actually a set of results of student identity verification of a plurality of users. Therefore, only the representative student needs to queue up and performs an operation at the checkout, to implement the verification at the same time, which is efficient and not prone to errors.

Further, to help a merchant side cooperate more accurately to perform a service, the merchant can further actively intervene in advance to designate a representative student, so as to establish a representative identity that can be identified by the merchant. This helps improve security and avoid accidental interaction or repeated interaction. Specifically, the merchant NFC terminal can send group collection permission information to the user mobile terminal through NFC communication (for example, first-round NFC communication); and receive a result of student identity verification of the login user provided by the user mobile terminal, and a result that is of student identity verification of each related user and that is collected by the user mobile terminal from a related mobile terminal by using a permission corresponding to the group collection permission information. Based on the group collection permission information, the user mobile terminal can collect (for example, collect through NFC, or can notify another mobile terminal of interaction through active broadcast) results of student identity verification of other students from smartphones or smartwatches of the other students, and then perform integration to obtain a group verification result. When verification is performed on the other students, a credential indicating that verification succeeds obtained through historical verification can be directly used and provided to the representative student.

Because there is a representative student in the student demographic, after sending the group collection permission information to the user mobile terminal, in a case that a specified waiting condition is satisfied (for example, the user mobile terminal has not completed group verification within a specified time period), the merchant NFC terminal can refuse to perform NFC communication with another user mobile terminal other than the user mobile terminal.

For ease of verification of another student, there can be a plurality of merchant NFC machines at a merchant in which the target user is located. At least one merchant NFC terminal is deployed in an area outside a checkout of the merchant, is used to send the group collection permission information, can be further used to perform pre-verification on another student, and then is assembled to the representative student, so that the representative student then interacts with the merchant NFC machine at the checkout.

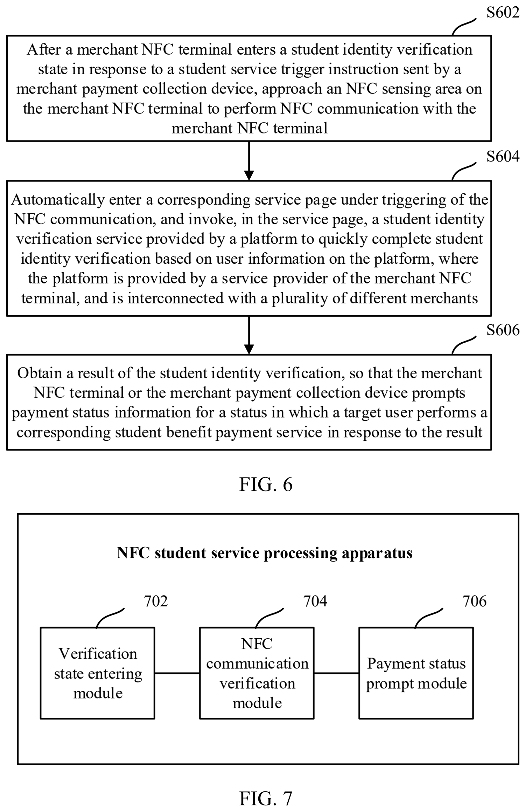

The above-mentioned content is mainly described from a perspective of a merchant NFC terminal. Based on the same idea, one or more implementations of this specification further provide another NFC student service processing method, which is described from a perspective of a user mobile terminal. FIG. 6 is a schematic flowchart of the another method.

The procedure in FIG. 6 includes the following steps.

S602: After a merchant NFC terminal enters a student identity verification state in response to a student service trigger instruction sent by a merchant payment collection device, approach an NFC sensing area on the merchant NFC terminal to perform NFC communication with the merchant NFC terminal.

S604: Automatically enter a corresponding service page under triggering of the NFC communication, and invoke, in the service page, a student identity verification service provided by a platform to quickly complete student identity verification based on user information on the platform, where the platform is provided by a service provider of the merchant NFC terminal, and is interconnected with a plurality of different merchants.

S606: Obtain a result of the student identity verification, so that the merchant NFC terminal or the merchant payment collection device prompts payment status information for a status in which a target user performs a corresponding student benefit payment service in response to the result.

For details, refer to the above-mentioned descriptions for understanding. Details are omitted here for simplicity.

Based on the same idea, one or more implementations of this specification further provide apparatuses and devices corresponding to the above-mentioned methods, as shown in FIG. 7 to FIG. 10. The apparatuses and the devices can correspondingly perform the above-mentioned methods and related optional solutions.

FIG. 7 is a schematic diagram of a structure of an NFC student service processing apparatus according to one or more implementations of this specification. The apparatus is used in a merchant NFC terminal, and the apparatus includes: a verification state entering module 702, configured to: receive a student service trigger instruction sent by a merchant payment collection device, and enter a student identity verification state in response to the student service trigger instruction; an NFC communication verification module 704, configured to: in the student identity verification state, if a user mobile terminal approaches an NFC sensing area on the merchant NFC terminal, perform NFC communication with the user mobile terminal to enable the merchant NFC terminal or the merchant payment collection device to obtain a result of student identity verification of a target user corresponding to the user mobile terminal, where the student identity verification is completed quickly based on user information on a platform that is provided by a service provider of the merchant NFC terminal and that is interconnected with a plurality of different merchants; and a payment status prompt module 706, configured to prompt payment status information based on a status of performing, by the merchant NFC terminal or the merchant payment collection device, a corresponding student benefit payment service for the target user in response to the result.

Optionally, the NFC communication verification module 704 is configured to perform the NFC communication with the user mobile terminal to trigger the user mobile terminal to enter a corresponding service page, so that the user mobile terminal invokes, in the service page, a student identity verification service provided by the platform to quickly complete the student identity verification, and the merchant NFC terminal or the merchant payment collection device correspondingly obtains the result of the student identity verification of the target user after the student identity verification is completed.

Optionally, the result of the student identity verification is indirectly represented by the student benefit obtained based on the student identity, and/or is directly represented by whether the verification succeeds.

Optionally, the NFC communication verification module 704 is configured to: perform first-round NFC communication with the user mobile terminal, so that the student identity verification of the target user is completed on the user mobile terminal, and the student benefit corresponding to the student identity is obtained. In a process of completing the student identity verification, the user mobile terminal leaves an NFC communication range of the merchant NFC terminal; and

perform second-round NFC communication with the user mobile terminal if the user mobile terminal re-approaches the NFC sensing area on the merchant NFC terminal, so that the merchant NFC terminal or the merchant payment collection device determines that the target user has obtained the student benefit, so as to use the student benefit to perform the corresponding student benefit payment service for the target user.

Optionally, the first-round NFC communication specifically includes: providing, to the user mobile terminal through NFC communication, address information of the service page for invoking the student identity verification service provided by the platform, so that the user mobile terminal automatically accesses the service page; and/or the second-round NFC communication specifically includes: obtaining a credential of the student benefit or identification information of the target user that is provided by the user mobile terminal through the NFC communication, where the identification information is used to query the student benefit obtained by the target user.

Optionally, the student service trigger instruction is sent to the merchant NFC terminal by performing a corresponding operation on a first operation control on the merchant payment collection device.

The NFC communication verification module 704 is configured to: after the user mobile terminal leaves the NFC communication range of the merchant NFC terminal after the first-round NFC communication is performed, receive a payment trigger instruction sent by the merchant payment collection device, where the payment trigger instruction is sent by performing a corresponding operation on a second operation control on the merchant payment collection device; and perform the second-round NFC communication with the user mobile terminal if the user mobile terminal re-approaches the NFC sensing area on the merchant NFC terminal.

Optionally, the NFC communication verification module 704 is configured to: in a case that the merchant payment collection device is not triggered again, if the user mobile terminal re-approaches the NFC sensing area on the merchant NFC terminal, determine, based on user information provided after the user mobile terminal is re-approaching, whether a user change occurs; and if no user change occurs, perform the second-round NFC communication with the user mobile terminal.

Optionally, the target user includes a login user of the user mobile terminal and one or more related users of the login user.

The verification state entering module 702 is configured to enter a group student identity verification state in response to the student service trigger instruction.

The NFC communication verification module 704 is configured to: in the group student identity verification state, if the user mobile terminal approaches the NFC sensing area on the merchant NFC terminal, perform the NFC communication with the user mobile terminal to enable the merchant NFC terminal or the merchant payment collection device to obtain a result of group student identity verification of the target user corresponding to the user mobile terminal.

Optionally, the NFC communication verification module 704 is configured to: send group collection permission information to the user mobile terminal through the NFC communication; and receive a result of student identity verification of the login user provided by the user mobile terminal, and a result that is of student identity verification of each related user and that is collected by the user mobile terminal from a related mobile terminal by using a permission corresponding to the group collection permission information.

Optionally, the NFC communication verification module 704 is configured to: after sending the group collection permission information to the user mobile terminal, in a case that a specified waiting condition is satisfied, refuse to perform the NFC communication with another user mobile terminal other than the user mobile terminal.

Optionally, a merchant in which the target user is located has a plurality of merchant NFC terminals, and at least one of the merchant NFC terminals is deployed in an area outside a checkout of the merchant, for sending the group collection permission information.

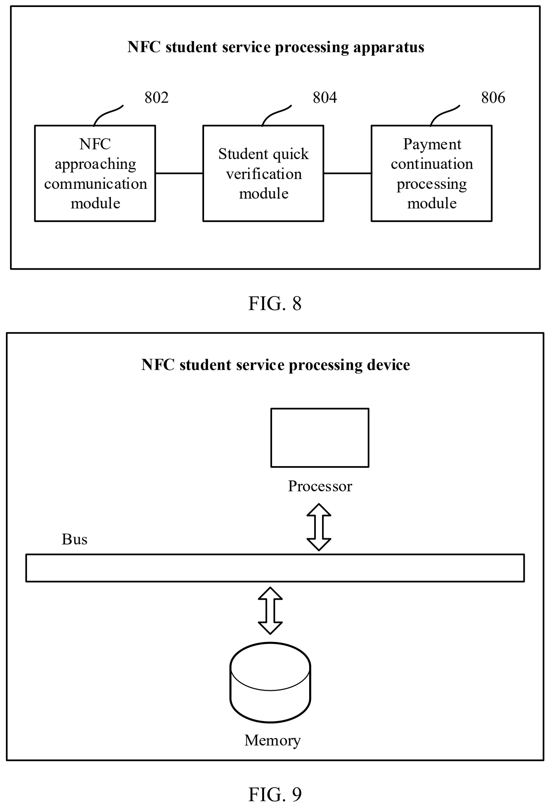

FIG. 8 is a schematic diagram of a structure of another NFC student service processing apparatus according to one or more implementations of this specification. The apparatus is used in a user mobile terminal, and the apparatus includes: an NFC approaching communication module 802, configured to: after a merchant NFC terminal enters a student identity verification state in response to a student service trigger instruction sent by a merchant payment collection device, approach an NFC sensing area on the merchant NFC terminal to perform NFC communication with the merchant NFC terminal; a student quick verification module 804, configured to: automatically enter a corresponding service page under triggering of the NFC communication, and invoke, in the service page, a student identity verification service provided by a platform to quickly complete student identity verification based on user information on the platform, where the platform is provided by a service provider of the merchant NFC terminal, and is interconnected with a plurality of different merchants; and a payment continuation processing module 806, configured to obtain a result of the student identity verification, so that the merchant NFC terminal or the merchant payment collection device prompts payment status information for a status in which a target user performs a corresponding student benefit payment service in response to the result.

FIG. 9 is a schematic diagram of a structure of an NFC student service processing device according to one or more implementations of this specification. The device is used in a merchant NFC terminal, and the device includes: at least one processor; and a memory communicatively connected to the at least one processor, where the memory stores instructions that are capable of being executed by the at least one processor, and the instructions are executed by the at least one processor, so that the at least one processor is capable of: receiving a student service trigger instruction sent by a merchant payment collection device, and entering a student identity verification state in response to the student service trigger instruction; in the student identity verification state, if a user mobile terminal approaches an NFC sensing area on the merchant NFC terminal, performing NFC communication with the user mobile terminal to enable the merchant NFC terminal or the merchant payment collection device to obtain a result of student identity verification of a target user corresponding to the user mobile terminal, where the student identity verification is completed quickly based on user information on a platform that is provided by a service provider of the merchant NFC terminal and that is interconnected with a plurality of different merchants; and prompting payment status information based on a status of performing, by the merchant NFC terminal or the merchant payment collection device, a corresponding student benefit payment service for the target user in response to the result.

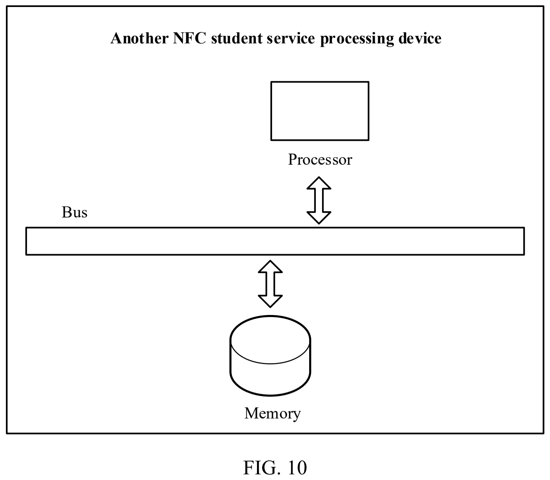

FIG. 10 is a schematic diagram of a structure of another NFC student service processing device according to one or more implementations of this specification. The device is used in a user mobile terminal, and the device includes: at least one processor; and a memory communicatively connected to the at least one processor, where the memory stores instructions that are capable of being executed by the at least one processor, and the instructions are executed by the at least one processor, so that the at least one processor is capable of: after a merchant NFC terminal enters a student identity verification state in response to a student service trigger instruction sent by a merchant payment collection device, approaching an NFC sensing area on the merchant NFC terminal to perform NFC communication with the merchant NFC terminal; automatically entering a corresponding service page under triggering of the NFC communication, and invoking, in the service page, a student identity verification service provided by a platform to quickly complete student identity verification based on user information on the platform, where the platform is provided by a service provider of the merchant NFC terminal, and is interconnected with a plurality of different merchants; and obtaining a result of the student identity verification, so that the merchant NFC terminal or the merchant payment collection device prompts payment status information for a status in which a target user performs a corresponding student benefit payment service in response to the result.

Based on the same idea, one or more implementations of this specification further provide a nonvolatile computer storage medium used in a merchant NFC terminal, where the medium stores computer-executable instructions, and the computer-executable instructions are set as follows: receiving a student service trigger instruction sent by a merchant payment collection device, and entering a student identity verification state in response to the student service trigger instruction; in the student identity verification state, if a user mobile terminal approaches an NFC sensing area on the merchant NFC terminal, performing NFC communication with the user mobile terminal to enable the merchant NFC terminal or the merchant payment collection device to obtain a result of student identity verification of a target user corresponding to the user mobile terminal, where the student identity verification is completed quickly based on user information on a platform that is provided by a service provider of the merchant NFC terminal and that is interconnected with a plurality of different merchants; and prompting payment status information based on a status of performing, by the merchant NFC terminal or the merchant payment collection device, a corresponding student benefit payment service for the target user in response to the result.

One or more implementations of this specification further provide another nonvolatile computer storage medium used in a user mobile terminal, where the medium stores computer-executable instructions, and the computer-executable instructions are set as follows: after a merchant NFC terminal enters a student identity verification state in response to a student service trigger instruction sent by a merchant payment collection device, approaching an NFC sensing area on the merchant NFC terminal to perform NFC communication with the merchant NFC terminal; automatically entering a corresponding service page under triggering of the NFC communication, and invoking, in the service page, a student identity verification service provided by a platform to quickly complete student identity verification based on user information on the platform, where the platform is provided by a service provider of the merchant NFC terminal, and is interconnected with a plurality of different merchants; and obtaining a result of the student identity verification, so that the merchant NFC terminal or the merchant payment collection device prompts payment status information for a status in which a target user performs a corresponding student benefit payment service in response to the result.

In the 1990s, whether a technical improvement is a hardware improvement (for example, an improvement to a circuit structure like a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure to a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system into a PLD without requesting a chip manufacturer to design and produce an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). Currently, the Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

The systems, apparatuses, modules, or units described in the above-mentioned implementations can be specifically implemented by a computer chip or an entity, or can be implemented by a product having a specific function. A typical implementation device is a computer. Specifically, for example, the computer can be a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above apparatus is described by dividing functions into various units. Certainly, during implementation of this specification, functions of units can be implemented in the same or more software and/or hardware.

A person skilled in the art should understand that implementations of this specification can be provided as methods, systems, or computer program products. Therefore, the implementations of this specification can use a form of hardware only implementations, software only implementations, or implementations with a combination of software and hardware. In addition, a form of a computer program product that is implemented on one or more computer-usable storage media (including but not limited to a disk storage, a CD-ROM, an optical storage, etc.) that include computer-usable program code can be used in the implementations of this specification.

This specification is described with reference to the flowcharts and/or block diagrams of the method, the device (system), and the computer program product according to implementations of this specification. It is worthwhile to understand that computer program instructions can be used to implement each procedure and/or each block in the flowcharts and/or the block diagrams and a combination of procedures and/or a combination of blocks in the flowcharts and/or the block diagrams. These computer program instructions can be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can alternatively be stored in a computer-readable storage that can instruct the computer or the another programmable data processing device to work in a specific way, so the instructions stored in the computer-readable storage generate an artifact that includes an instruction apparatus. The instruction apparatus implements a specific function in one or more procedures in the flowcharts and/or in one or more blocks in the block diagrams.

These computer program instructions can alternatively be loaded onto the computer or the another programmable data processing device, so that a series of operation steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It is worthwhile to further note that the terms "include", "contain", or any other variant thereof are intended to cover a non-exclusive inclusion, so that a process, a method, a product, or a device that includes a list of elements not only includes those elements but also includes other elements that are not expressly listed, or further includes elements inherent to such a process, method, product, or device. Without more constraints, an element preceded by "includes a ..." does not preclude the existence of additional identical elements in the process, method, product, or device that includes the element.

This specification can be described in the general context of computer-executable instructions executed by a computer, for example, a program module. Generally, the program module includes a routine, a program, an object, a component, a data structure, etc. executing a specific task or implementing a specific abstract data type. This specification can alternatively be practiced in distributed computing environments. In the distributed computing environments, tasks are performed by remote processing devices connected through a communication network. In a distributed computing environment, the program module can be located in both local and remote computer storage media including storage devices.

The implementations of this specification are described in a progressive way. For same or similar parts in the implementations, refer to each other. Each implementation focuses on a difference from other implementations. Particularly, the apparatus, device, and nonvolatile computer storage medium implementations are basically similar to the method implementation, and therefore is briefly described. For a related part, refer to some descriptions in the method implementation.

Specific implementations of this specification are described above. Other implementations fall within the scope of the appended claims. In some cases, the actions or steps described in the claims can be performed in an order different from that in the implementations and desired results can still be achieved. In addition, the process depicted in the accompanying drawings does not necessarily require a particular sequence or continuous sequence shown to achieve the expected results. In some implementations, multi-task processing and parallel processing are feasible or may be advantageous.

The above-mentioned content is merely one or more implementations of this specification, and is not intended to limit this specification. A person skilled in the art knows that one or more implementations of this specification can have various modifications and changes. Any modification, equivalent replacement, improvement, etc. made within the spirit and principle of one or more implementations of this specification shall fall within the scope of the claims of this specification.

### EXAMPLES

1. An NFC student service processing method performed by a merchant NFC terminal, wherein the method comprises:
   receiving a student service trigger instruction sent by a merchant payment collection device, and entering a student identity verification state in response to the student service trigger instruction;
   in the student identity verification state, if a user mobile terminal approaches an NFC sensing area on the merchant NFC terminal, performing NFC communication with the user mobile terminal to enable the merchant NFC terminal or the merchant payment collection device to obtain a result of student identity verification of a target user corresponding to the user mobile terminal, wherein the student identity verification is completed based on user information on a platform that is provided by a service provider of the merchant NFC terminal and that is interconnected with a plurality of different merchants; and
   prompting payment status information based on a status of performing, by the merchant NFC terminal or the merchant payment collection device, a corresponding student benefit payment service for the target user in response to the result.
2. The method of example 1, wherein the performing NFC communication with the user mobile terminal to enable the merchant NFC terminal or the merchant payment collection device to obtain a result of student identity verification of a target user corresponding to the user mobile terminal comprises:
   performing the NFC communication with the user mobile terminal to trigger the user mobile terminal to enter a corresponding service page, so that the user mobile terminal invokes, in the service page, a student identity verification service provided by the platform to complete the student identity verification, and the merchant NFC terminal or the merchant payment collection device correspondingly obtains the result of the student identity verification of the target user after the student identity verification is completed.
3. The method of example 1 or 2, wherein the result of the student identity verification is indirectly represented by a student benefit obtained based on a student identity, and/or is directly represented by whether the verification succeeds.
4. The method of example 3, wherein the performing NFC communication with the user mobile terminal to enable the merchant NFC terminal or the merchant payment collection device to obtain a result of student identity verification of a target user corresponding to the user mobile terminal comprises:
   performing first-round NFC communication with the user mobile terminal, so that the student identity verification of the target user is completed on the user mobile terminal, and the student benefit corresponding to the student identity is obtained, wherein in a process of completing the student identity verification, the user mobile terminal leaves an NFC communication range of the merchant NFC terminal; and
   performing second-round NFC communication with the user mobile terminal if the user mobile terminal re-approaches the NFC sensing area on the merchant NFC terminal, so that the merchant NFC terminal or the merchant payment collection device determines that the target user has obtained the student benefit, so as to use the student benefit to perform the corresponding student benefit payment service for the target user.
5. The method of example 4, wherein the first-round NFC communication comprises:
   providing, to the user mobile terminal through NFC communication, address information of the service page for invoking the student identity verification service provided by the platform, so that the user mobile terminal automatically accesses the service page; and/or
   the second-round NFC communication comprises: obtaining a credential of the student benefit or identification information of the target user that is provided by the user mobile terminal through the NFC communication, wherein the identification information is used to query the student benefit obtained by the target user.
6. The method of example 4, wherein the student service trigger instruction is sent to the merchant NFC terminal by performing a corresponding operation on a first operation control on the merchant payment collection device; and
   the performing second-round NFC communication with the user mobile terminal if the user mobile terminal re-approaches the NFC sensing area on the merchant NFC terminal comprises:
   after the user mobile terminal leaves the NFC communication range of the merchant NFC terminal after the first-round NFC communication is performed, receiving a payment trigger instruction sent by the merchant payment collection device, wherein the payment trigger instruction is sent by performing a corresponding operation on a second operation control on the merchant payment collection device; and
   performing the second-round NFC communication with the user mobile terminal if the user mobile terminal re-approaches the NFC sensing area on the merchant NFC terminal.
7. The method of example 4, wherein the performing the second-round NFC communication with the user mobile terminal if the user mobile terminal re-approaches the NFC sensing area on the merchant NFC terminal comprises:
   in a case that the merchant payment collection device is not triggered again, if the user mobile terminal re-approaches the NFC sensing area on the merchant NFC terminal, determining, based on user information provided after the user mobile terminal is re-approaching, whether a user change occurs; and
   if no user change occurs, performing the second-round NFC communication with the user mobile terminal.
8. The method of example 1, wherein the performing NFC communication with the user mobile terminal to enable the merchant NFC terminal or the merchant payment collection device to obtain a result of student identity verification of a target user corresponding to the user mobile terminal comprises:
   performing the NFC communication with the user mobile terminal to obtain the result of the student identity verification of the target user corresponding to the user mobile terminal, and returning the result to the merchant payment collection device, so that the merchant payment collection device initiates the corresponding student benefit payment service based on a preferential price corresponding to the student identity.
9. The method of example 1, wherein the target user comprises a login user of the user mobile terminal and one or more related users of the login user;
   the entering a student identity verification state in response to the student service trigger instruction comprises:
   entering a group student identity verification state in response to the student service trigger instruction; and
   the in the student identity verification state, if a user mobile terminal approaches an NFC sensing area on the merchant NFC terminal, performing NFC communication with the user mobile terminal to enable the merchant NFC terminal or the merchant payment collection device to obtain a result of student identity verification of a target user corresponding to the user mobile terminal comprises:
      in the group student identity verification state, if the user mobile terminal approaches the NFC sensing area on the merchant NFC terminal, performing the NFC communication with the user mobile terminal to enable the merchant NFC terminal or the merchant payment collection device to obtain a result of group student identity verification of the target user corresponding to the user mobile terminal.
10. The method of example 9, wherein the performing NFC communication with a user mobile terminal to enable the merchant NFC terminal to obtain a result of student identity verification of a target user corresponding to the user mobile terminal comprises:
   sending group collection permission information to the user mobile terminal through the NFC communication; and
   receiving a result of student identity verification of the login user provided by the user mobile terminal, and a result that is of student identity verification of each related user and that is collected by the user mobile terminal from a related mobile terminal by using a permission corresponding to the group collection permission information.
11. The method of example 10, wherein after the sending group collection permission information to the user mobile terminal, the method further comprises:
   in a case that a specified waiting condition is satisfied, refusing to perform the NFC communication with another user mobile terminal other than the user mobile terminal.
12. The method of example 10, wherein a merchant in which the target user is located has a plurality of merchant NFC terminals, and at least one of the merchant NFC terminals is deployed in an area outside a checkout of the merchant, for sending the group collection permission information.
13. An NFC student service processing method performed by a user mobile terminal, wherein the method comprises:
   after a merchant NFC terminal enters a student identity verification state in response to a student service trigger instruction sent by a merchant payment collection device, approaching an NFC sensing area on the merchant NFC terminal to perform NFC communication with the merchant NFC terminal;
   automatically entering a corresponding service page under triggering of the NFC communication, and invoking, in the service page, a student identity verification service provided by a platform to complete student identity verification based on user information on the platform, wherein the platform is provided by a service provider of the merchant NFC terminal, and is interconnected with a plurality of different merchants; and
   obtaining a result of the student identity verification, so that the merchant NFC terminal or the merchant payment collection device prompts payment status information for a status in which a target user performs a corresponding student benefit payment service in response to the result.
14. An NFC student service processing apparatus used in a merchant NFC terminal, wherein the apparatus comprises:
   a verification state entering module, configured to: receive a student service trigger instruction sent by a merchant payment collection device, and enter a student identity verification state in response to the student service trigger instruction;
   an NFC communication verification module, configured to: in the student identity verification state, if the user mobile terminal approaches an NFC sensing area on the merchant NFC terminal, perform NFC communication with a user mobile terminal to enable the merchant NFC terminal or the merchant payment collection device to obtain a result of student identity verification of a target user corresponding to the user mobile terminal, wherein the student identity verification is completed based on user information on a platform that is provided by a service provider of the merchant NFC terminal and that is interconnected with a plurality of different merchants; and
   a payment status prompt module, configured to prompt payment status information based on a status of performing, by the merchant NFC terminal or the merchant payment collection device, a corresponding student benefit payment service for the target user in response to the result.
15. The apparatus of example 14, wherein the NFC communication verification module is configured to perform the NFC communication with the user mobile terminal to trigger the user mobile terminal to enter a corresponding service page, so that the user mobile terminal invokes, in the service page, a student identity verification service provided by the platform to complete the student identity verification, and the merchant NFC terminal or the merchant payment collection device correspondingly obtains the result of the student identity verification of the target user after the student identity verification is completed.
16. The apparatus of example 14 or 15, wherein the result of the student identity verification is indirectly represented by a student benefit obtained based on a student identity, and/or is directly represented by whether the verification succeeds.
17. The apparatus of example 16, wherein the NFC communication verification module is configured to: perform first-round NFC communication with the user mobile terminal, so that the student identity verification of the target user is completed on the user mobile terminal, and the student benefit corresponding to the student identity is obtained, wherein in a process of completing the student identity verification, the user mobile terminal leaves an NFC communication range of the merchant NFC terminal; and
   perform second-round NFC communication with the user mobile terminal if the user mobile terminal re-approaches the NFC sensing area on the merchant NFC terminal, so that the merchant NFC terminal or the merchant payment collection device determines that the target user has obtained the student benefit, so as to use the student benefit to perform the corresponding student benefit payment service for the target user.
18. The apparatus of example 17, wherein the first-round NFC communication comprises:
   providing, to the user mobile terminal through NFC communication, address information of the service page for invoking the student identity verification service provided by the platform, so that the user mobile terminal automatically accesses the service page; and/or
   the second-round NFC communication comprises: obtaining a credential of the student benefit or identification information of the target user that is provided by the user mobile terminal through the NFC communication, wherein the identification information is used to query the student benefit obtained by the target user.
19. The apparatus of example 17, wherein the student service trigger instruction is sent to the merchant NFC terminal by performing a corresponding operation on a first operation control on the merchant payment collection device; and
   the NFC communication verification module is configured to: after the user mobile terminal leaves the NFC communication range of the merchant NFC terminal after the first-round NFC communication is performed, receive a payment trigger instruction sent by the merchant payment collection device, wherein the payment trigger instruction is sent by performing a corresponding operation on a second operation control on the merchant payment collection device; and
   perform the second-round NFC communication with the user mobile terminal if the user mobile terminal re-approaches the NFC sensing area on the merchant NFC terminal.
20. The apparatus of example 17, wherein the NFC communication verification module is configured to: in a case that the merchant payment collection device is not triggered again, if the user mobile terminal re-approaches the NFC sensing area on the merchant NFC terminal, determine, based on user information provided after the user mobile terminal is re-approaching, whether a user change occurs; and
   if no user change occurs, perform the second-round NFC communication with the user mobile terminal.
21. The apparatus of example 14, wherein the target user comprises a login user of the user mobile terminal and one or more related users of the login user;
   the verification state entering module is configured to enter a group student identity verification state in response to the student service trigger instruction; and
   the NFC communication verification module is configured to: in the group student identity verification state, if the user mobile terminal approaches the NFC sensing area on the merchant NFC terminal, perform the NFC communication with the user mobile terminal to enable the merchant NFC terminal or the merchant payment collection device to obtain a result of group student identity verification of the target user corresponding to the user mobile terminal.
22. The apparatus of example 21, wherein the NFC communication verification module is configured to: send group collection permission information to the user mobile terminal through the NFC communication; and
   receive a result of student identity verification of the login user provided by the user mobile terminal, and a result that is of student identity verification of each related user and that is collected by the user mobile terminal from a related mobile terminal by using a permission corresponding to the group collection permission information.
23. An NFC student service processing apparatus used in a user mobile terminal, wherein the apparatus comprises:
   an NFC approaching communication module, configured to: after a merchant NFC terminal enters a student identity verification state in response to a student service trigger instruction sent by a merchant payment collection device, approach an NFC sensing area on the merchant NFC terminal to perform NFC communication with the merchant NFC terminal;
   a student quick verification module, configured to: automatically enter a corresponding service page under triggering of the NFC communication, and invoke, in the service page, a student identity verification service provided by a platform to complete student identity verification based on user information on the platform, wherein the platform is provided by a service provider of the merchant NFC terminal, and is interconnected with a plurality of different merchants; and
   a payment continuation processing module, configured to obtain a result of the student identity verification, so that the merchant NFC terminal or the merchant payment collection device prompts payment status information for a status in which a target user performs a corresponding student benefit payment service in response to the result.
24. An NFC student service processing device used in a merchant NFC terminal, wherein the device comprises:
   at least one processor; and
   a memory communicatively connected to the at least one processor, wherein
   the memory stores instructions that are capable of being executed by the at least one processor, and the instructions are executed by the at least one processor, so that the at least one processor is capable of:
      receiving a student service trigger instruction sent by a merchant payment collection device, and entering a student identity verification state in response to the student service trigger instruction;
      in the student identity verification state, if a user mobile terminal approaches an NFC sensing area on the merchant NFC terminal, performing NFC communication with the user mobile terminal to enable the merchant NFC terminal or the merchant payment collection device to obtain a result of student identity verification of a target user corresponding to the user mobile terminal, wherein the student identity verification is completed based on user information on a platform that is provided by a service provider of the merchant NFC terminal and that is interconnected with a plurality of different merchants; and
      prompting payment status information based on a status of performing, by the merchant NFC terminal or the merchant payment collection device, a corresponding student benefit payment service for the target user in response to the result.
25. An NFC student service processing device used in a user mobile terminal, wherein the device comprises:
   at least one processor; and
   a memory communicatively connected to the at least one processor, wherein
   the memory stores instructions that are capable of being executed by the at least one processor, and the instructions are executed by the at least one processor, so that the at least one processor is capable of:
      after a merchant NFC terminal enters a student identity verification state in response to a student service trigger instruction sent by a merchant payment collection device, approaching an NFC sensing area on the merchant NFC terminal to perform NFC communication with the merchant NFC terminal;
      automatically entering a corresponding service page under triggering of the NFC communication, and invoking, in the service page, a student identity verification service provided by a platform to complete student identity verification based on user information on the platform, wherein the platform is provided by a service provider of the merchant NFC terminal, and is interconnected with a plurality of different merchants; and
      obtaining a result of the student identity verification, so that the merchant NFC terminal or the merchant payment collection device prompts payment status information for a status in which a target user performs a corresponding student benefit payment service in response to the result.

## Claims

1. An NFC student service processing method performed by a merchant NFC terminal, wherein the method comprises:
receiving a student service trigger instruction sent by a merchant payment collection device, and entering a student identity verification state in response to the student service trigger instruction;
in the student identity verification state, if a user mobile terminal approaches an NFC sensing area on the merchant NFC terminal, performing NFC communication with the user mobile terminal to enable the merchant NFC terminal or the merchant payment collection device to obtain a result of student identity verification of a target user corresponding to the user mobile terminal, wherein the student identity verification is completed based on user information on a platform that is provided by a service provider of the merchant NFC terminal and that is interconnected with a plurality of different merchants; and
prompting payment status information based on a status of performing, by the merchant NFC terminal or the merchant payment collection device, a corresponding student benefit payment service for the target user in response to the result.

2. The method of claim 1, wherein the performing NFC communication with the user mobile terminal to enable the merchant NFC terminal or the merchant payment collection device to obtain a result of student identity verification of a target user corresponding to the user mobile terminal comprises:
performing the NFC communication with the user mobile terminal to trigger the user mobile terminal to enter a corresponding service page, so that the user mobile terminal invokes, in the service page, a student identity verification service provided by the platform to complete the student identity verification, and the merchant NFC terminal or the merchant payment collection device correspondingly obtains the result of the student identity verification of the target user after the student identity verification is completed.

3. The method of claim 1 or 2, wherein the result of the student identity verification is indirectly represented by a student benefit obtained based on a student identity, and/or is directly represented by whether the verification succeeds.

4. The method of claim 3, wherein the performing NFC communication with the user mobile terminal to enable the merchant NFC terminal or the merchant payment collection device to obtain a result of student identity verification of a target user corresponding to the user mobile terminal comprises:
performing first-round NFC communication with the user mobile terminal, so that the student identity verification of the target user is completed on the user mobile terminal, and the student benefit corresponding to the student identity is obtained, wherein in a process of completing the student identity verification, the user mobile terminal leaves an NFC communication range of the merchant NFC terminal; and
performing second-round NFC communication with the user mobile terminal if the user mobile terminal re-approaches the NFC sensing area on the merchant NFC terminal, so that the merchant NFC terminal or the merchant payment collection device determines that the target user has obtained the student benefit, so as to use the student benefit to perform the corresponding student benefit payment service for the target user.

5. The method of claim 4, wherein the first-round NFC communication comprises: providing, to the user mobile terminal through NFC communication, address information of the service page for invoking the student identity verification service provided by the platform, so that the user mobile terminal automatically accesses the service page; and/or
the second-round NFC communication comprises: obtaining a credential of the student benefit or identification information of the target user that is provided by the user mobile terminal through the NFC communication, wherein the identification information is used to query the student benefit obtained by the target user.

6. The method of claim 4, wherein the student service trigger instruction is sent to the merchant NFC terminal by performing a corresponding operation on a first operation control on the merchant payment collection device; and
the performing second-round NFC communication with the user mobile terminal if the user mobile terminal re-approaches the NFC sensing area on the merchant NFC terminal comprises:
after the user mobile terminal leaves the NFC communication range of the merchant NFC terminal after the first-round NFC communication is performed, receiving a payment trigger instruction sent by the merchant payment collection device, wherein the payment trigger instruction is sent by performing a corresponding operation on a second operation control on the merchant payment collection device; and
performing the second-round NFC communication with the user mobile terminal if the user mobile terminal re-approaches the NFC sensing area on the merchant NFC terminal.

7. The method of claim 4, wherein the performing the second-round NFC communication with the user mobile terminal if the user mobile terminal re-approaches the NFC sensing area on the merchant NFC terminal comprises:
in a case that the merchant payment collection device is not triggered again, if the user mobile terminal re-approaches the NFC sensing area on the merchant NFC terminal, determining, based on user information provided after the user mobile terminal is re-approaching, whether a user change occurs; and
if no user change occurs, performing the second-round NFC communication with the user mobile terminal.

8. The method of claim 1, wherein the performing NFC communication with the user mobile terminal to enable the merchant NFC terminal or the merchant payment collection device to obtain a result of student identity verification of a target user corresponding to the user mobile terminal comprises:
performing the NFC communication with the user mobile terminal to obtain the result of the student identity verification of the target user corresponding to the user mobile terminal, and returning the result to the merchant payment collection device, so that the merchant payment collection device initiates the corresponding student benefit payment service based on a preferential price corresponding to the student identity.

9. The method of claim 1, wherein the target user comprises a login user of the user mobile terminal and one or more related users of the login user;
the entering a student identity verification state in response to the student service trigger instruction comprises:
entering a group student identity verification state in response to the student service trigger instruction; and
the in the student identity verification state, if a user mobile terminal approaches an NFC sensing area on the merchant NFC terminal, performing NFC communication with the user mobile terminal to enable the merchant NFC terminal or the merchant payment collection device to obtain a result of student identity verification of a target user corresponding to the user mobile terminal comprises:
in the group student identity verification state, if the user mobile terminal approaches the NFC sensing area on the merchant NFC terminal, performing the NFC communication with the user mobile terminal to enable the merchant NFC terminal or the merchant payment collection device to obtain a result of group student identity verification of the target user corresponding to the user mobile terminal.

10. The method of claim 9, wherein the performing NFC communication with a user mobile terminal to enable the merchant NFC terminal to obtain a result of student identity verification of a target user corresponding to the user mobile terminal comprises:
sending group collection permission information to the user mobile terminal through the NFC communication; and
receiving a result of student identity verification of the login user provided by the user mobile terminal, and a result that is of student identity verification of each related user and that is collected by the user mobile terminal from a related mobile terminal by using a permission corresponding to the group collection permission information.

11. The method of claim 10, wherein after the sending group collection permission information to the user mobile terminal, the method further comprises:
in a case that a specified waiting condition is satisfied, refusing to perform the NFC communication with another user mobile terminal other than the user mobile terminal.

12. The method of claim 10, wherein a merchant in which the target user is located has a plurality of merchant NFC terminals, and at least one of the merchant NFC terminals is deployed in an area outside a checkout of the merchant, for sending the group collection permission information.

13. An NFC student service processing method performed by a user mobile terminal, wherein the method comprises:
after a merchant NFC terminal enters a student identity verification state in response to a student service trigger instruction sent by a merchant payment collection device, approaching an NFC sensing area on the merchant NFC terminal to perform NFC communication with the merchant NFC terminal;
automatically entering a corresponding service page under triggering of the NFC communication, and invoking, in the service page, a student identity verification service provided by a platform to complete student identity verification based on user information on the platform, wherein the platform is provided by a service provider of the merchant NFC terminal, and is interconnected with a plurality of different merchants; and
obtaining a result of the student identity verification, so that the merchant NFC terminal or the merchant payment collection device prompts payment status information for a status in which a target user performs a corresponding student benefit payment service in response to the result.

14. An NFC student service processing device used in a merchant NFC terminal, wherein the device comprises:
at least one processor; and
a memory communicatively connected to the at least one processor, wherein
the memory stores instructions that are capable of being executed by the at least one processor, and the instructions are executed by the at least one processor, so that the at least one processor is capable of performing the method of any one of claims 1 to 12.

15. An NFC student service processing device used in a user mobile terminal, wherein the device comprises:
at least one processor; and
a memory communicatively connected to the at least one processor, wherein
the memory stores instructions that are capable of being executed by the at least one processor, and the instructions are executed by the at least one processor, so that the at least one processor is capable of performing the method of claim 13.
